# EUROPEAN PATENT APPLICATION

(11) **EP 1 277 573 A1**
(43) Date of publication of application: **22.01.2003**
(21) Application number: 01202757.9
(22) Date of filing: 19.07.2001
(51) Int. Cl.: B32B 27/32, D01D 5/253, D01D 5/42, D01F 8/06, B29C 55/06

(54) **Polyolefin tape or yarn**

(71) Applicant: LANKHORST INDUTECH B.V., NL-8607 AD Sneek (NL)
(72) Inventor: Loos, Joachim, 5673 LH Nuenen (NL); Jacobs, Johannes Antonius Joseph, 8447 EB Heerenveen (NL); Peijs, Antonius Andreas Johannes Maria, 5502 EJ Veldhoven (NL); Schimanski, Tilo, 5663 HS Geldrop (NL)
(74) Representative: Prins, Adrianus Willem

(57) **Abstract**

The invention is directed to a monoaxially drawn polyolefine multilayer tape or yarn of the AB or ABA type having a stretch ratio of more than 12, substantially consisting of a central layer (B) of a polyolefine selected from polyethylene and polypropylene, and one or two other layers (A) of a polyolefine from the same class as the material of the central layer B, the DSC melting point of the material of the said other layers (A) being lower than the DSC melting point of the material of the said central layer (B), wherein the central layer (B) is between 50 and 99 wt.% of the material and the other layers (A) between 1 and 50 wt.%.

## Description

The invention is directed to a polypropylene multilayer tape or yarn, suitable for producing reinforcing woven and non-woven type materials, especially for strengthening and/or stiffening of products.

Polyolefin tapes and yarns are generally produced from polyolefin films of mono- or multilayer type, by cutting the film to the desired width. At some stage of the production process the material can be stretched in order to increase the strength and stiffness of the material.

JP-A 2000-8244 describes a flat yarn cloth for reinforcing laminated layers, prepared from a composite yarn of the ABA type, wherein the B layer is a polypropylene and the A layers are based on an ethylene-α-olefin copolymer or a blend of two ethylene-α-olefin copolymers. The yarns are produced by co-extruding the two materials, slitting the film and stretching it to a stretch ratio of 3-12. After weaving, the material is heat treated to weld the yarns together.

EP-A 336,210 describes a three-ply drawn polyolefin laminate comprising a core layer of polypropylene and/or LLDPE and top layers from butene-1 polymers. The material can be used in the packaging area. This material has poor mechanical properties.

EP-A 776,762 describes a polyolefin tape or yarn based on a coextruded polyolefin material, having a stretch ratio of 6 to 10. This material is described as being suitable for preparing all kinds of cloths, strappings and the like.

Although the properties of the material according to EP-A 776,762 are quite good, especially with respect to tensile strength, there is a need for further improvement. It is a first object of the present invention to provide a tape or yarn having these improved mechanical properties.

In composite materials yarns and cloths are often used for reinforcing. Most commonly used are glass fibre materials. However, glass fibre materials have the disadvantage that they make it very difficult to recycle the materials in which they are incorporated. It would be very useful if the glass fibres could be replaced by polymeric fibres, thereby making it easier to recycle the composite materials. One of the strong advantages of glass fibres reside in the stiffness thereof, which is generally one of the weak aspects of polymeric fibres. Accordingly, it is a further object of the invention to provide polymeric materials that have sufficient stiffness to be able to replace glass fibres in composite materials.

With respect to recycling of the products produced from polyolefin tapes and yarns it would be an advantage if all component of the material could be classified as the same material, such as polypropylene or polyethylene. The advantage thereof would be that the resulting recycled material would still be one material, instead of a blend of various components (no contamination}.

The present invention is directed to a monoaxially drawn polyolefine multilayer tape or yarn of the AB or ABA type having a stretch ratio of more than 12, substantially consisting of a central layer (B) of a polyolefine selected from polyethylene and polypropylene, and one or two other layers (A) of a polyolefine from the same class as the material of the central layer B, the DSC melting point of the material of the said other layers (A) being lower than the DSC melting point of the material of the said central layer (B), wherein the central layer (B) is between 50 and 99 wt.% of the material and the other layers (A) between 1 and 50 wt.%.

Surprisingly it has been found that this material has excellent properties with respect to mechanical strength, stiffness and the like. Because of its composition, it can be qualified as a mono-component material being either polyethylene or polypropylene, which is an advantage in recycling. More in particular it is possible to recycle production scrap as part of the central layer component. Further, in view of the requirements to manufacturers of consumer goods, such as cars and the like, concerning the possibility of recycling of the components after the useful life of the product, it is important that components consist of one class of material only.

By combining the material composition of the laminate (tape/yarn) with the extremely high total stretch ratio, more than 12, preferably more than 15, such as at least 20 and even up to 50, a material has been created that can be used advantageously for all kinds of reinforcements, that can replace e.g. glass fibres in various reinforcing applications and that can be used in various higher temperature applications, such as automotive or aerospace applications. In general, the material of the invention especially suitable for (lightweight) construction applications, high pressure applications and medical applications. It is possible to apply the material in the construction of houses, ships, cars, and the like, but also as reinforcement in high pressure parts, such as tubes (for oil production and the like), or in the production of ortheses.

In the context of this invention, the material has been defined as meeting a minimum level of the total stretch ratio (TSR). TSR is defined as the degree of stretching from an isotropic melt to the final tape. This is at least in part defined by the difference in speed between the stretch rollers. The actual value of the TSR can be determined from the birefringence and/or the E-Modulus of the final tape or yarn. The TSR applies especially to the central layer, which preferably is a highly crystalline material. The material of the other layer will generally be less crystalline. The function of the other layer is especially the provision of the possibility to weld the tapes, fibres or yarns together when a woven, non-woven or staple of the material is heat treated.

The basic materials to be used in the production of the tape or yarn according to the invention are polypropylene or polyethylene.

In case of the use of polypropylene as the material for the tape, yarn or fibre, the material for the central, or core, layer B will preferably be a homopolypropylene, preferably having a relatively high molecular weight, such as a weight average MW of at least 250.000 and a melting temperature of at least 160°C. It is to be noted that the central layer preferably consists of one material only, but that in case of recycle of production scrap, minor amounts of the material of the other layer may also be present in the core layer. This will generally not exceed 10 wt.%.

The material of the outer layers in this embodiment is, as indicated above, also a polypropylene, preferably a copolymer of propylene with ethylene or another α-olefine. An important aspect thereof is that the softening point of the material, generally indicated by the DSC melting point (as defined in ISO NR) is lower than the softening point of the central layer, the difference being at least 10°C. As the product of the invention is generally used in a form where the tapes or fibres are at angle to each other (woven, non-woven materials), the outer layer makes it possible to heat treat the woven material, thereby welding together the individual fibres/yarns or tapes to create a (woven) material of very high structural integrity. By selecting the softening point at a sufficiently large distance from the softening point of the central layer, it is possible to have a heat treatment which does not impair the properties of the material itself.

It is preferred to use a propylene ethylene copolymer, having an ethylene content of between 1 and.25 mol.%, as the material for the outer layers A. It is also possible to use blends of two of these materials.

In case of the use of polyethylene, basically the same considerations apply. As the central layer an HDPE is preferably used, i.e a polyethylene having a density of at least 950 kg/m³. The weight average molecular weight is preferably at least 250.000 and the melting point is 130°C or higher. It is to be noted that the central layer preferably consists of one material only, but that in case of recycle of production scrap, minor amounts of the material of the other layer may also be present in the core layer. This will generally not exceed 10 wt.%.

The material of the other layer is characterised in that it will also be a polyethylene, but now with a lower melting point, the difference being at least 10°C. Suitable polyethylenes are random or block ethylene copolymers, LLDPE, LDPE, VLDPE and the like.

For both types of materials it is to be noted that they will generally contain conventional additives, including but not limited to dyes and pigments, flame retarders, UV-stabilisers, anti-oxidants, carbon black and the like.

In a less preferred option of the general approach to the present invention, each of the outer layers a itself consists of two or more separate layers. It is also possible that in the three-layer configuration (ABA), the two layers have a slightly different composition.

The major part of the product of the invention consists of the central layer (B). In a preferred embodiment the amount of central layer is between 50 and 99 wt.%, preferably between 60 and 90 wt.%. The balance of the material consist of the outer layers (A).

The thickness of the material will generally be up to 300, preferably between 25 and 300 µm. This is governed by the original film thickness and the stretch ratio, in this case the ratio of the speed of the stretch rollers. The width of the tapes can vary over a wide range, such as from 25 µm up to 50 cm or more.

As indicated above, the material of the invention has very good mechanical properties. For example, the E-modulus will be at least 10 GPa, preferably at least 12.5 GPa. The strength can easily be at least 0.25 GPa, even up to at least 0.4 GPa. The upper limit for the strength that can be obtained in the materials of the present invention is about half of the theoretical value, which means that for polypropylene a value of 1 GPa and for polyethylene a value of 5 GPa will generally be the upper limit.

The tape or yarn according to the invention can be used to produce all kinds of materials such as those discussed in the introduction. One of the preferred embodiments of the use of the tape or yarn according to the invention is the production of a (reinforcing) cloth for example by weaving, winding, chopping and stapling, and/or compacting it from the tape, fibre or yarn. Preferably, the material is then heat treated and pressed. By this heat treatment the individual fibres are welded together. In this way the structural integrity of the cloth will be guaranteed. The said heat treatment will be done at a temperature between the softening point of the material of the outer layers (A) and the material of the central layer (B). A surprising property of the heat treated material is the improved abrasion resistance and the resistance against delamination of the individual fibres.

The production of the material of the invention will generally be done by co-extruding the various layers. Generally cast extrusion is used, whereby the extruder has a flat dye plate, without profile. After co-extrusion and cooling the material will be slit into the required width of the individual strands, followed by stretching.

The stretching can be a single stage or a multi-stage stretching. The stretch ratio in each step may be between 1.1 and 50, the total draw ratio being important for determining the TSR, as defined herein. It is preferred to stretch the material at a temperature between 20 and 250°C, preference being given to stretching at a temperature below the melting point of the materials used. In case of multi-stage stretching, the preference is to using the same temperature range for each stretching step, although it is possible to use different temperatures. Between two stretching steps an annealing step may be included. This can also be done after the final stretching.

The material of the invention, both the individual fibres or a cloth prepared therefrom can suitably be used for incorporation in a matrix material, for example as reinforcing material. Examples thereof are various composite materials such as fibre reinforced plastics, automotive applications such as bumpers, dashboards, engine covers and the like, application in the aerospace industry, such as construction materials for aeroplanes and the like. Other applications have been discussed hereabove.

The invention is now elucidated on the basis of the following examples, which are not to be construed as limiting the invention.

### Example

Using a co-extrusion line, a film was prepared consisting of a core layer B of polypropylene having a DSC softening temperature of 152°C and two top layers A of a propylene copolymer having a DSC softening temperature of 135°C (ABA-structure). The weight ratio A:B:A was 5:90:5.

The material was stretched at 55°C in a ratio of 5 followed by stretching at 128°C in a ratio of 1.87, thereby producing a material that had a stretch ratio of 17 and a thickness of 70µm.

The elasticity modulus of the material was 15.8 and the stiffness was 585 MPa.

The material was processed into yarns of a width of 2.1 mm. The yarns were woven to produce a tissue material, which was subsequently heat treated at 150°C to consolidate the structure. The final material had quasi isotropic stiffness of 7 GPa and a strength of more than 270 MPa.

## Claims

1. Monoaxially drawn polyolefine multilayer tape or yarn of the AB or ABA type having a stretch ratio of more than 12, substantially consisting of a central layer (B) of a polyolefine selected from polyethylene and polypropylene, and one or two other layers (A) of a polyolefine from the same class as the material of the central layer B, the DSC melting point of the material of the said other layers (A) being lower than the DSC melting point of the material of the said central layer (B), wherein the central layer (B) is between 50 and 99 wt.% of the material and the other layers (A) between 1 and 50 wt.%.

2. Tape or yarn according to claim 1, wherein the stretch ratio is at least 15, preferably at least 20.

3. Tape or yarn according to claim 1 or 2, wherein the stretch ratio is at most 50.

4. Tape or yarn according to claims 1-3, wherein the material of the central and other layers is based on polypropylene.

5. Tape or yarn according to claims 1-3, wherein the material of the central and other layers is based on polyethylene.

6. Tape or yarn according to claim 1-5, wherein the material of the central layer is a crystalline polymer having a weight average molecular weight of at least 250.000.

7. Tape or yarn according to claims 1-6, having a thickness of between 25 and 300 µm.

8. Tape or yarn according to claims 1-7, having an E-modulus of at least 10 GPa, preferably at least 12.5 GPa.

9. Woven or non-woven composite prepared from a tape or yarn according to claims 1-8, optionally having been heat treated.

10. Composite material comprising a matrix material reinforced with tape or yarn according to claims 1-8, or woven or non-woven composite according to claim 9.
